Europäisches Patentamt

European Patent Office

Office européen des brevets

(19)

(11) Publication number: **0 202 023**
**A2**

(12) # EUROPEAN PATENT APPLICATION

(21) Application number: 86302710.8

(22) Date of filing: 11.04.86

(51) Int. Cl.⁴: **C 21 D 9/63**

(30) Priority: 16.04.85 JP 79385/85
15.05.85 JP 101598/85
30.05.85 JP 115214/85
13.09.85 JP 201767/85

(43) Date of publication of application:
20.11.86 Bulletin 86/47

(84) Designated Contracting States:
BE DE FR GB IT LU NL

(71) Applicant: MITSUBISHI JUKOGYO KABUSHIKI KAISHA
5-1, Marunouchi 2-chome Chiyoda-ku
Tokyo(JP)

(71) Applicant: KAWASAKI STEEL CORPORATION
1-28, Kitahonmachi-Dori 1-Chome
Chuo-ku Kobe-Shi Hyogo 650(JP)

(72) Inventor: Harada, Masahiro Mitsubishi Jukogyo K.K.
Hiroshima Techn. Inst. 6-22, Kanonshin-Machi 4-Ch.
Nishi-Ku Hiroshima City Hiroshima Pref.(JP)

(72) Inventor: Okita, Hajime Mitsubishi Jukogyo K.K.
Hiroshima Techn. Inst. 6-22, Kanonshin-Machi 4-Ch.
Nishi-Ku Hiroshima City Hiroshima Pref.(JP)

(72) Inventor: Yanagi, Kenichi Mitsubishi Jukogyo K.K.
Hiroshima Techn. Inst. 6-22, Kanonshin-Machi 4-Ch.
Nishi-Ku Hiroshima City Hiroshima Pref.(JP)

(72) Inventor: Toyofuku, Toshihiro Mitsubishi Jukogyo K.K.
Hiroshima Techn. Inst. 6-22, Kanonshin-Machi 4-Ch.
Nishi-Ku Hiroshima City Hiroshima Pref.(JP)

(72) Inventor: Hyodo, Kaneaki Mitsubishi Jukogyo K.K.
Hiroshima
Shipyard Engine Works 6-22 Kanonshin-Machi 4-Chome
Nishi-Ku Hiroshima City Hiroshima Pref.(JP)

(72) Inventor: Fukada, Yasuo Mitsubishi Jukogyo K.K.
Hiroshima
Shipyard Engine Works 6-22 Kanonshin-Machi 4-Chom
Nishi-Ku Hiroshima City Hiroshima Pref.(JP)

(72) Inventor: Fukushima, Takeo Mitsubishi Jukogyo K.K.
Hiroshima
Shipyard Engine Works 6-22 Kanonshin-Machi 4-Chom
Nishi-Ku Hiroshima City Hiroshima Pref.(JP)

(72) Inventor: Sato, Kuniaki Kawasaki Steel Corp.
Chiba Works 1, Kawasaki-Cho
Chiba City Chiba Pref.(JP)

(72) Inventor: Nakajima, Yasuhisa Kawasaki Steel Corp.
Chiba Works 1, Kawasaki-Cho
Chiba City Chiba Pref.(JP)

(72) Inventor: Kishida, Akira Kawasaki Steel Corp.
Chiba Works 1, Kawasaki-Cho
Chiba City Chiba Pref.(JP)

(72) Inventor: Kaihara, Toshikazu Kawasaki Steel Corp.
Chiba Works 1, Kawasaki-Cho
Chiba City Chiba Pref.(JP)

(72) Inventor: Ohta, Norio Kawasaki Steel Corp.
Chiba Works 1, Kawasaki-Cho
Chiba City Chiba Pref.(JP)

(72) Inventor: Ida, Yukio Kawasaki Steel Corp.
Chiba Works 1, Kawasaki-Cho
Chiba City Chiba Pref.(JP)

(72) Inventor: Muramoto, Harumasa Kawasaki Steel Corp.
Chiba Works 1, Kawasaki-Cho
Chiba City Chiba Pref.(JP)

(72) Inventor: Soeda, Naohiko Kawasaki Steel Corp.
Chiba Works 1, Kawasaki-Cho
Chiba City Chiba Pref.(JP)

(74) Representative: Overbury, Richard Douglas et al,
HASELTINE LAKE & CO Hazlitt House 28 Southampton
Buildings Chancery Lane
London WC2A 1AT(GB)

(54) Support device for mo

(57) A support device for a moving strip comprises floaters arranged only below the moving strip for jetting fluid against a lower surface of the strip to float it. A plurality of upright baffle plates are provided on a pressure receiving surface of each the floater in opposition to the lower surface of the strip. The baffle plates extend in moving directions of the
./...

EP 0 202 023 A2

strip and are aligned with each other in width directions of the strip. Each the floater is provided with at least one support roll extending in a width direction of the strip and movable into a lower position and a higher position higher than the highest portion of the floater. With this arrangement, the moving strip is stably supported without contacting any solid members, and pressurized fluid from the floaters is prevented from unduly escaping from clearances between the strip and the floaters. The support device is capable of supporting the strip not only by floaters in floating condition but also by at least one roll at each the floater as the case may be to reduce power cost and to prevent a leading end of the strip from collision with the floaters and other components when the strip is initially introduced into a treating apparatus for the strip.

FIG.9

0202023

60-79,385 comb.

## SUPPORT DEVICE FOR MOVING METAL STRIP

This invention relates to a support device for a moving metal strip such as a steel strip for the purpose of heating and cooling as in annealing or coating, drying, plating, or the like.

In this specification, such a support device is mainly explained with a continuous annealing furnace for continuously heat-treating cold rolled steel strips. However, this is only by way of example, and the support device could be applied to any other purposes.

In general, metal strips such as cold rolled steel strips are continuously heat-treated in continuous annealing furnaces to give them required mechanical properties.

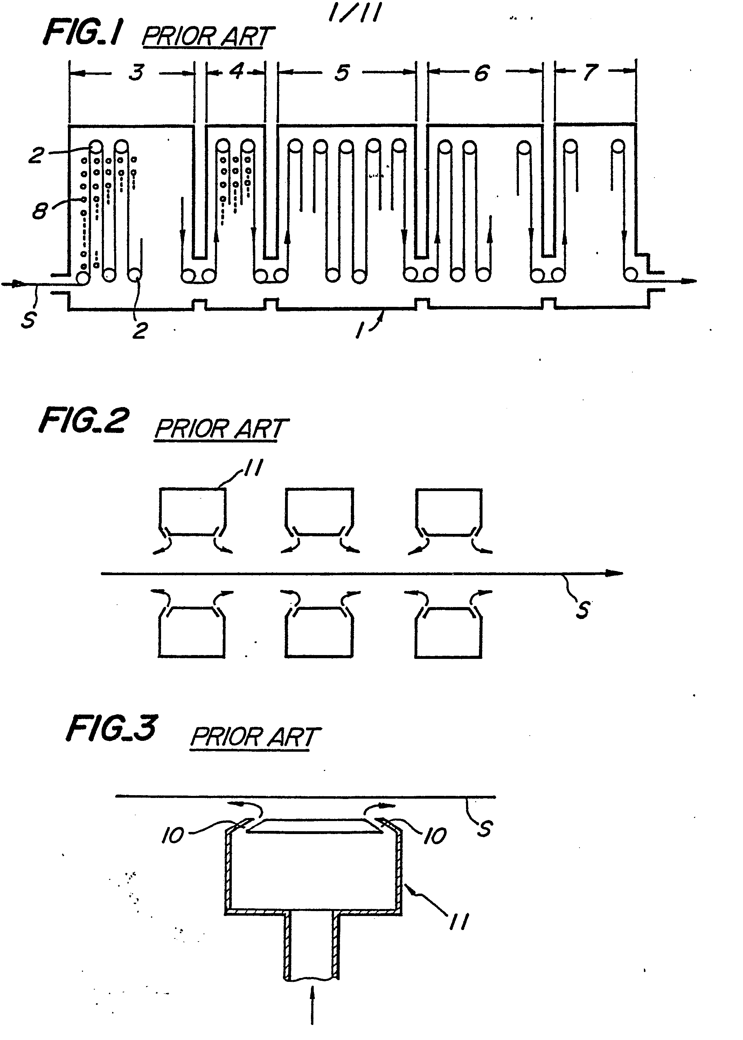

Fig. 1 illustrates a schematic arrangement of a continuous annealing furnace of prior art. A metal strip S is paid out of a pay-off reel (not shown) and then introduced into a cleaning tank, a looper (not shown) and the like, thereafter the strip S is supplied into the continuous annealing furnace. As shown in Fig. 1, the metal strip S is trained about a number of helper rolls 2 located in upper and lower portions of the continuous annealing furnace 1 so as to move alternately upward and downward. During such upward and downward movements, the strip S is heated and cooled according to mechanical properties required for strip products so that the strip at room temperature finally has required mechanical properties such as yield strength, tensile strength, deep drawing capability and the like. The continuous annealing furnace is filled with a reducing gas as hydrogen nitride for preventing surface oxidation of the metal strip S.

The continuous annealing furnace 1 comprises a heating zone 3, a soaking zone 4 a rapid cooling zone 5, an overaging zone 6 and a final cooling zone 7 successively from an inlet to an outlet. The heating and soaking zones 3 form a heating zone which is provided with radiant tubes 8 for heating the metal strip with radiation. The metal strip S is heated to 650-900°C in the heating zone 3 and is then heated to the same or higher temperatures in the soaking zone 4 for several ten seconds. The metal strip S is then rapidly cooled in the rapid cooling zone 5 to the order of 400°C at cooling rate 3-200°C/S with the aid of gas jet and cooling rolls. Then the metal strip S is kept at the order of 400°C in the overaging zone 6 for about two minutes so as to be subjected to an overaging. Finally, the strip S is cooled in the cooling zone 7 to temperatures near to room temperature.

With the prior art continuous annealing furnace 1, as the overaging requires such time, the overaging zone tends to be long such as 100 mm in a large type annealing furnace, so that the overall

- 3 -

0202023

length of the continuous annealing furnace tends to be more than 150 m. Accordingly, if the overaging zone 6 is shortened, the entire continuous annealing furnace can be shortened to reduce its initial cost.

In order to shorten the overaging zone 6, it is considered that the component of the metal strip S is changed so as to be able to heat it to higher temperatures. However, if the metal strip S is heated to such a higher temperature, the metal strip S is likely to be deformed owing to ununiform heating in width directions of the strip in conjunction with its reduced strength at the high temperature when it contacts unevenly the helper rolls 2 of relatively lower temperatures or the helper rolls 2 whose surfaces are unevenness due to carbon from rolling mill oil attached to the surfaces.

Moreover, when the metal strip S at high temperatures are moved upward and downward, the width of the strip narrows due to creep resulting from its gravity to produce products to be rejected. It is therefore required to maintain the metal strip horizontally without being contacted with helper rolls in order to enable the heating temperature of the metal strip S to be high.

In color coating or the like, the floater (air floating device) has been known for horizontally feeding a metal strip without using rolls. However, this floater serves not only to float the metal strip but also to heat or cool it. This floater cannot be

- 4 -

0202023

used without modifying it for the continuous annealing furnace which uses the radiant tubes for heating and the gas jets for cooling.

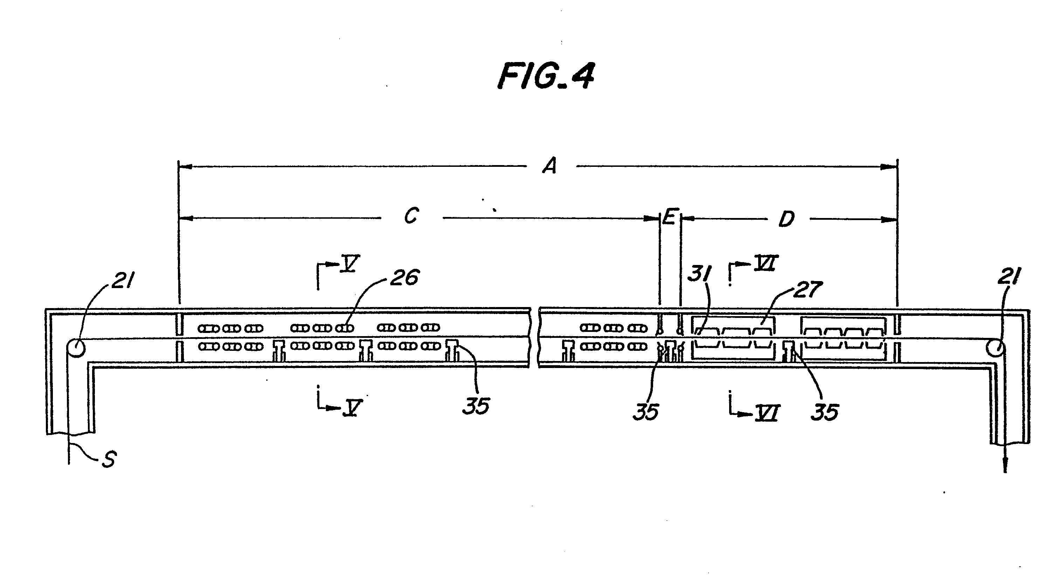

As shown in Fig. 3, the floater as above described includes narrow slits 10 through which air is injected in directions intersecting to each other against a metal strip S so as to float it. As shown in Fig. 2, the floaters are arranged in pairs in opposition to each other to hold the metal strip therebetween.

It is a primary object of the invention to provide a support device for a horizontally moving metal strip to stably support it without using any solid members in contact it.

In order to achieve this object, a supporting device for a moving strip according to the invention comprises floaters arranged only below the moving strip for jetting fluid against a lower surface of the strip to float it.

It is another object of the invention to provide an improved support device for a metal strip which prevents pressurized fluid from unduly escaping from clearances between the strip and a pressure receiving surface of a floater to hold the strip in its entirely by great stable force.

To this end, according to the invention, a plurality of baffle plates are provided on a pressure receiving surface of each the floater in opposition to the lower surface of the strip, the baffle plates extending in moving directions of the strip and being aligned with each other in width directions of the strip. Upper edges of the baffle plates are preferably formed circularly along a deformed curve of the strip by gravity.

It is a further object of the invention to provide a support device for a metal strip, which is capable of supporting the strip not only by floaters in floating condition but also by at least one solid body at each the floater to reduce power cost and to prevent a leading end of the strip from collision with the floaters and other components when the strip is initially introduced into a treating apparatus for the strip.

To achieve this object, according to the invention, each the floater is provided with at least one support roll extending in a width direction of the strip and movable into a lower position and a higher position higher than the highest portion of the floater.

In a preferred embodiment, a pair of the support rolls are provided each located upstream and downstream of each the floater and extend in width directions of the strip.

In another preferred embodiment, the support roll is provided in a recess formed in a pressure receiving surface of each the floater.

In order that the invention may be more clearly understood, preferred embodiments will be described, by way of example, with reference to the accompanying drawings.

Fig. 1 is a schematic view illustrating a continuous annealing furnace of the prior art;

Fig. 2 is a schematic view illustrating an arrangement of floaters of the prior art;

Fig. 3 is a schematic sectional view for explaining operation of the floater shown in Fig. 2;

Fig. 4 is a schematic view illustrating a continuous annealing furnace to which are applied the support devices according to the invention;

Fig. 5 is a sectional view taken along the line V-V in Fig. 4;

Fig. 6 is a sectional view taken along the line VI-VI in Fig. 4;

Fig. 7 is a perspective view illustrating a relation between a floater and a strip;

Fig. 8 is a graph showing a distribution of the static pressure of the floater shown in Fig. 7;

Fig. 9 is a perspective view illustrating one embodiment of a floater according to the invention;

Fig. 10 is a sectional view illustrating the interior of the floater shown in Fig. 9;

Fig. 11 is a graph showing a distribution of the static pressure on the floater shown in Fig. 9;

Fig. 12 is a side view illustrating another embodiment of the invention comprising pairs of rolls in addition to the floaters in lowered positions of the rolls;

Fig. 13 is a side view illustrating the embodiment of the invention shown in Fig. 12 illustrating the rolls in raised positions;

Fig. 14 is a side view of a further embodiment of the invention comprising pairs of rolls and floaters having baffle plates;

Fig. 15a is a side view of another embodiment of the invention comprising a single roll at each the floater illustrating the roll in a raised position;

Fig. 15b is a side view similar to the Fig. 15a, illustrating the roll in a lowered position;

Fig. 16 is a plan view of the floater and the roll shown in Figs. 15a and 15b;

Fig. 17a is a side view of a modification of the roll and the floater shown in Figs. 15a and 15b;

Fig. 17b is a side view similar to the roll and the floater shown in Fig. 17a, illustrating them in a lowered position; and

Fig. 18b is a plan view of the floater and the roll shown in Figs. 17a and 17b.

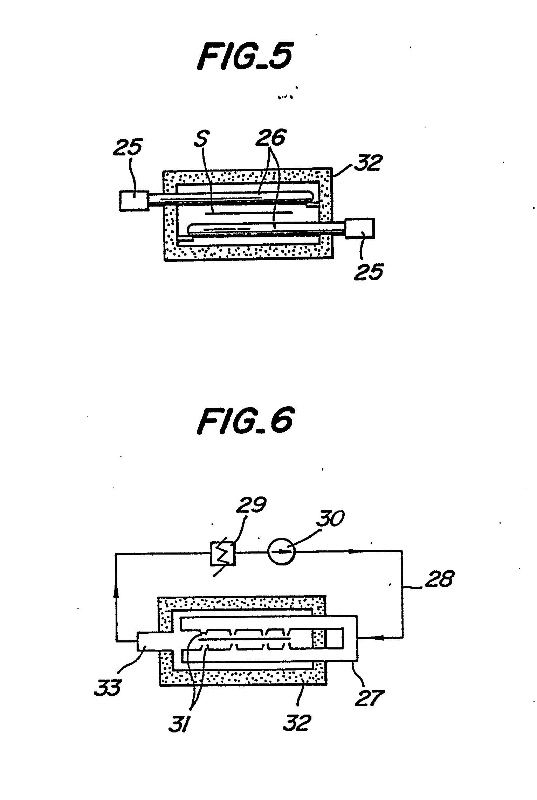

Fig. 1 illustrates a continuous annealing furnace equipped with devices of one embodiment of the invention, including a high temperature heating cooling zone A wherein a metal strip S moved by helper rolls and heated by radiant tubes to 750-800°C is further heated to 850-950°C and cooled to 750-800°C, thereby supplying the metal strip into a normal cooling zone. The high temperature heating cooling zone A comprises a heating portion C, a sealing portion E and a cooling portion D successively from the left viewed in Fig. 4 where the metal strip is supplied to the right where the metal strip leaves. In upstream and downstream sides of the zone A, there are provided deflector rolls 21 for guiding the metal strip S. In the heating portion C, as shown in Fig. 5, a number of radiant tubes connected to burners 25 are arranged above and under the metal strip S to heat it to 850-950°C.

In the cooling portion D thermally insulated from the heating portion C by the sealing portion E, there are provided V-shaped plenum chambers 27 embracing the metal strip S as shown in Fig. 6. These plenum chambers 27 are connected through lines 28 to a gas cooler 29 and a gas circulating fan 30 and are provided with a number of nozzles 31 directing to the metal strip for cooling it to 750-800°C by a cooling gas jetted from the nozzles 31. The cooling gas is collected at a collecting opening 33 provided in furnace walls of each the plenum chamber 27 and again cooled at the gas cooler so as to be supplied to the plenum chamber by the gas circulating fan 30.

As shown in Fig. 4, floaters 35 similar to that shown in Fig. 3 are provided in the heating, sealing and cooling portions C, E and D. A number of the floaters 35 are arranged only under the metal strip S with intervals of the order of a few meters. A floating gas is jetted from the floaters against the lower surface of the metal strip S, so that the metal strip S is horizontally maintained in a floating condition by the pressure of jetted floating gas. Accordingly, the metal strip S is heated by the radiant tubes 26 and cooled by the gas jetted from the nozzles 31, while the metal strip S is suported without contacting any solid members.

With this condition, as the metal strip S at the high temperature has greatly lowered its rigidity and has been repeatedly subjected to bending by the upper and lower rolls in the normal heating zone in the preceeding process, the metal strip S has been substantially flat in its longitudinal and width directions. Accordingly, the metal strip S is securely held under the floating condition by the floating gas pressure of the floater.

Moreover, as the floaters 35 are arranged with narrow intervals, the maximum deformation of the metal strip S due to the gravity is negligible relative to the intervals of the floaters, for example, of the order of 10-50 mm when a unit tension is 0.3-0.5 $kg/mm^2$, so that the pass line of the metal strip S is substantially horizontal. Accordingly, the upper and lower radiant tubes 26 are allowed to be arranged equidistantly to the metal strip without difference in radiant flux and hence difference in temperature between upper and lower surfaces of the metal strip S. Moreover, so long as the upper and lower nozzles 3 in the cooling portion D are equal in construction and flow rate, the upper and lower nozzles 31 are allowed to be arranged equidistantly to the metal strip to obtain the stable movement of the metal strip S without difference in cooling between the upper and lower surfaces of the metal strip. In this manner, the metal strip S moving under the floating condition by the floaters 35 can be heated by the radiant tubes 26 and cooled by the gas jet without any problem.

As can be seen from the above description, according to this embodiment the floaters are arranged only under the metal strip for floating it by air jetted from the floaters, so that the metal strip are moved horizontally in stable manner without contacting any solid members so as to heat it by the radiant tubes and to cool it by the gas jet for good annealing of the strip.

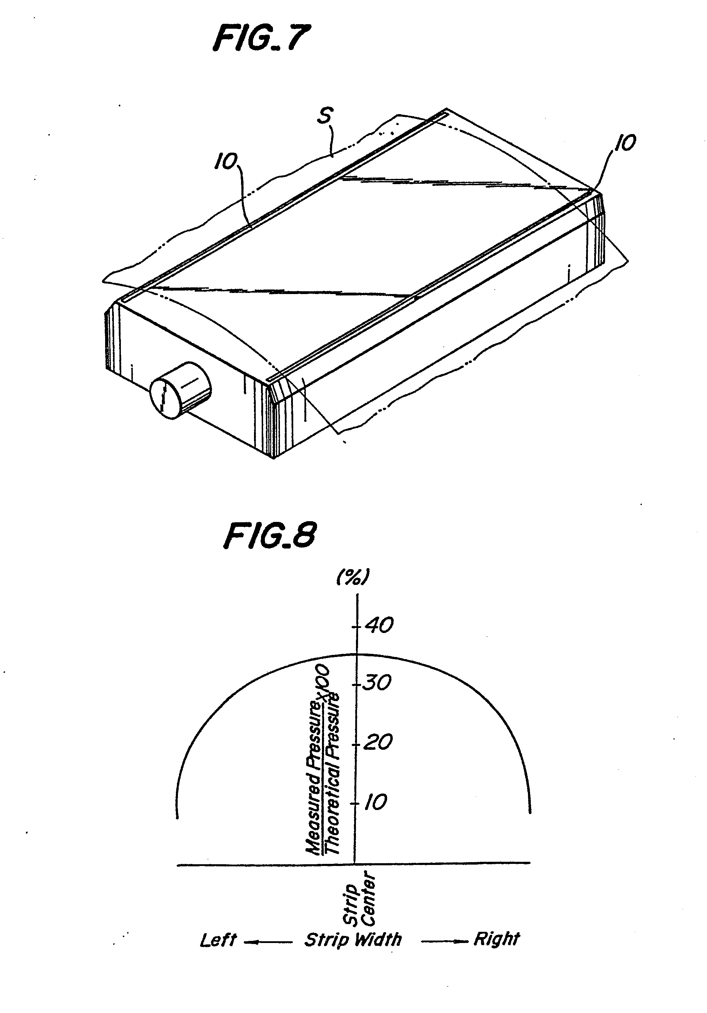

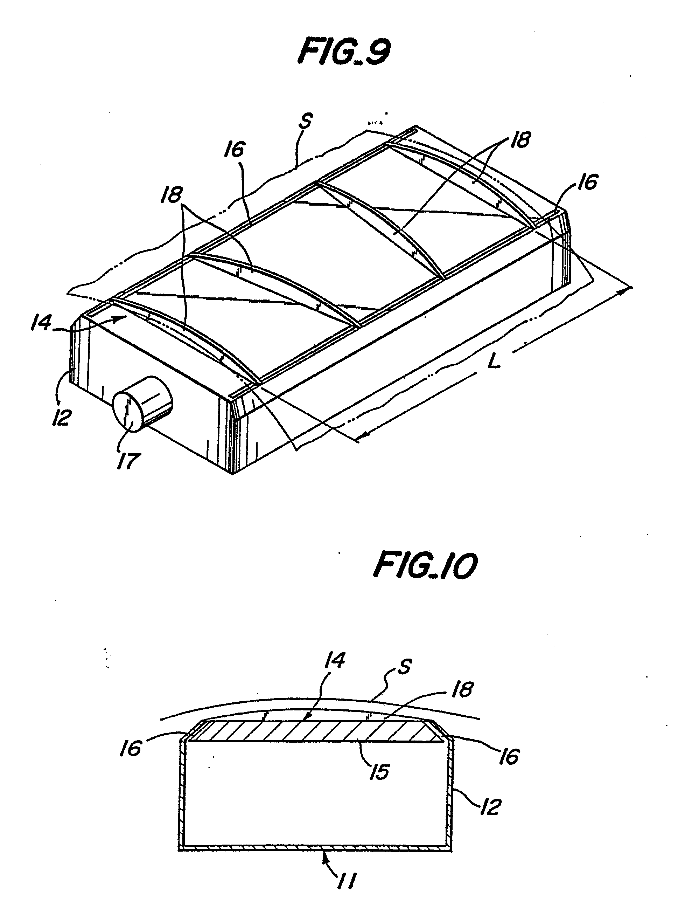

Referring to Fig. 7, the pressurized fluid from fluid jetting openings 10 flows the clearance between a pressure receiving surface and the strip S into width directions of the strip S. If the amount of the fluid flowing out of the clearance is large, required sufficient static pressure cannot be maintained. Referring to, for example, Fig. 8 illustrating a distribution of the pressure for supportion the strip, measured pressures are only 30-40% of the theoretical pressure even at the center of the strip, so that a pressure source of a great capacity is needed to increase the flow of pressurized fluid from the fluid jetting openings 10. Moreover, the pressures for supporting edges of the strips are very low as shown in Fig. 6 to an extent such that stable supporting of the strip is impossible.

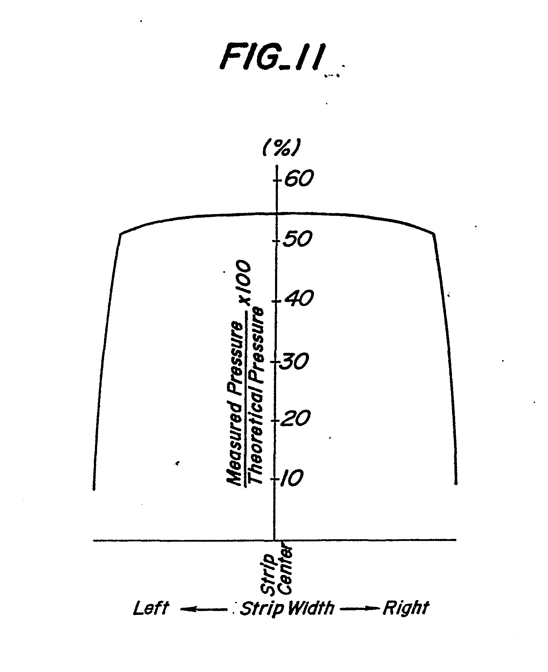

As shown in Figs. 9 and 10 illustrating one embodiment of the invention, wherein a' floater 11 comprises a box-shaped main body 12 forming a fluid chamber and an upper plate 15 integrally secured to the main body 12 and having a pressure receiving surface 14 in opposition to the strip S. Between the main body 12 and both edges of the upper plate 15 on upstream and downstream sides of the strips, there are provided slit-like fluid jetting openings 16 for obliquely jetting the pressurized fluid supplied in the fluid chamber toward the center of the strip. A pressure source (not shown) is connected to the main body 12 of the floater 11 through a line 17. Although the openings 16 have been designated as slits, the openings may be formed as a number of small apertures in alignment with width directions of the strip.

Referring to Fig. 9, according to the embodiment, on the pressure receiving surface 14 are provided a plurality (four in this embodiment) of upright baffle plates 18 extending in moving directions of the strip in parallel with each other and in alignment with the width direction of the strip S. Upper edges of the baffle plates 18 are formed circularly so as to minimize the clearances between the baffle plates and the strip S. A distance L between the outermost baffle plates in substantially equal to or less than the width of the strip S. These baffle plates are not necessarily parallel to each other.

With this arrangement, the pressurized fluid supplied from the pressure source through the line 17 into the floater 16 is jetted through the fluid jetting openings 16 into clearances between the pressure receiving surface 14 and the strip S to produce the static pressure. The pressurized fluid between the pressure receiving surface 14 and the strip S is obstructed from flowing out in the width directions of the strip by the baffle plates 18, thereby stably supporting the strip.

As shown in Fig. 11 illustrating the distribution of the static pressure in the width directions of the strip S, the supporting force is uniformly distributed throughout the width directions of the strip and the measured pressure is as much as 50-60% of the theoretical pressure.

According to this embodiment, therefore, the amount of the pressurized fluid tending to flow out between the strip and the floater is reduced to increase the static pressure therebetween, so that the pressure source can be minimized and the strip can be stably supported.

Example

The floaters having baffle plates were applied to a continuous annealing furance. A total distance of heating and cooling zones of the furnace in which the floaters were provided was 60 m with intervals of 5 m. A total length of pressure receiving surfaces of all the floaters was approximately 12% of a total length of the furnace. Metal strips having thicknesses of 0.2-2.0 mm and widths of 600-1,800 mm were passed through the furnace at line speeds of 40-400 m/min with unit tensions of 0.3-0.5 $kg/mm^2$ acting upon the strips.

The maximum deformations of the metal strips between the two floaters were 10-15 mm. These deformations were negligible with respect to the intervals of the floaters of 5 m, so that the pass lines of the strips were substantially horizontal with the aid of the floaters.

In carrying out the above embodiments, when a strip is initially introduced into, for example, an annealing furance (such initial introduction of a strip is referred to as "threading"), it is often advantageous to support the strip by rolls rather than supporting by floaters, in view of power economics. Moreover, it is often required to support the strip by rollers in order to avoid collision of a leading end of the strip with the floater and other components. Accordingly, it is desirable to support the strip by rolls as the case may be.

- 14 -

0202023

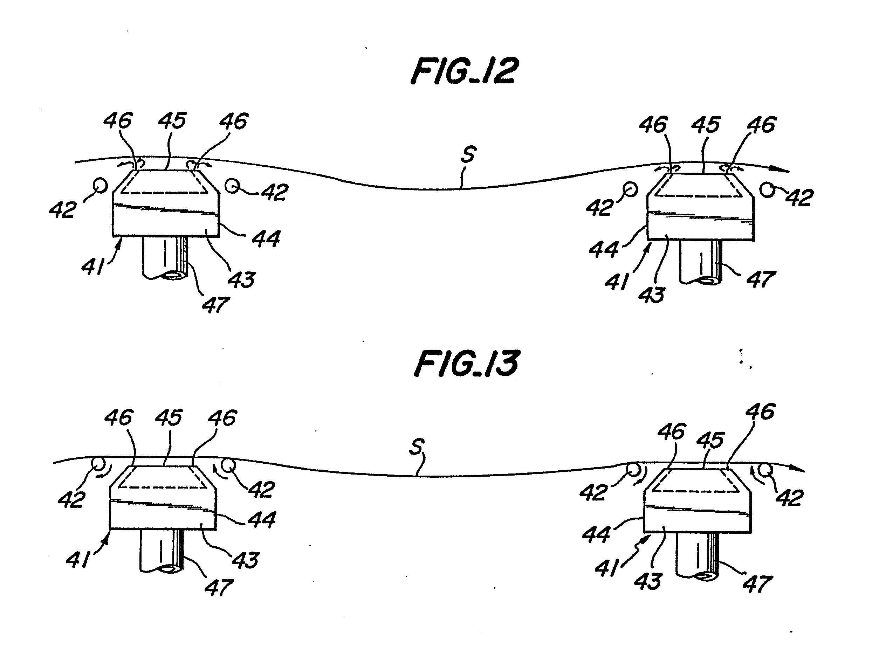

Figs. 12-13 illustrate another embodiment of the invention which comprises support rolls in addition to the floater in order to lower the cost for producing the air pressure for the floater and prevent the floater and components of the furnace from being damaged by collision of a leading end of the metal strip S.

Fig. 12 illustrates the support rolls not supporting the metal strip S, while Fig. 13 illustrates the support rolls supporting the metal strip S. As can be seen from these drawings, the floaters 41 are arranged with a predetermined interval along a direction passing the metal strip S and a pair of support rolls 42 at each floater 41.

The floater 41 arranged immediately below the metal strip S comprises a box-shaped main body 44 including a gas chamber 43 for accommodating hydrogen nitride. A flat upper surface of the main body 44 forms a pressure receiving surface 45 in opposition to the lower surface of the strip S. The pressure receiving surface 45 is provided at both ends with slit-like fluid jetting openings 46 extending in width directions of the strip S. The pressurized gas is supplied into the chamber 43 through a piping 47 from a fluid supply source (not shown). The supplied gas is obliquely jetted through the fluid jetting openings 46 in directions converging to each other toward the lower surface of the metal strip S to produce gas pressure between the pressure receiving surface 45 and the lower surface of the metal strip S for floating and supporting the strip above the pressure receiving surface 45.

The support rolls 42 are arranged upstream and downstream of each the floater 41 and extend in width directions of the strip S. The pair of support rolls 42 assume an upper position above the pressure receiving surface 45 (Fig. 13) and a lower position below the pressure receiving surface (Fig. 12) with the aid of lifting means (not shown) and are rotated at circumferential speeds equal to the moving speeds of the strip S in directions the same as the moving direction of the strip.

With this arrangement, when the support rolls 42 assume in their lower positions as shown in Fig. 12, the gas is jetted through the fluid jetting openings 46 to support the strip S moving in its longitudinal direction above the pressure receiving surfaces 45. The strip S is held in the form of a catenary between two floaters without contacting any solid members. On the other hand, in case that a leading end of the strip is initially fed into a furnace or in other cases, the support rolls 42 are rotated in their upper positions as shown in Fig. 13, so that the strip S is supported by the rolls 42 in contact therewith.

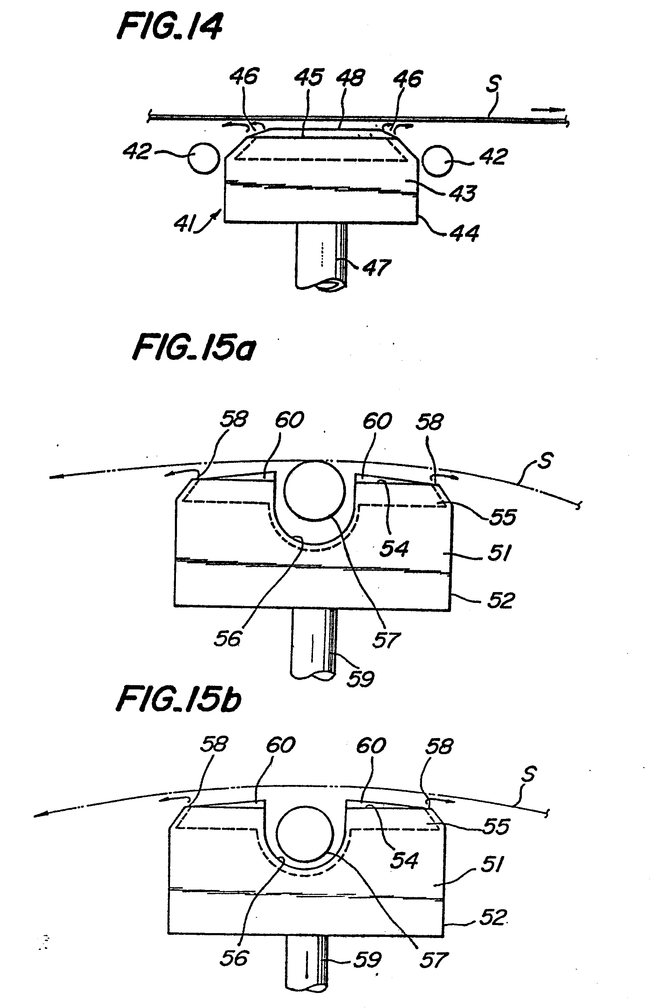

Fig. 14 illustrates a modification of the floater shown in Figs. 12 and 13. This floater 41 is provided on its pressure receiving surface 45 with a plurality of baffle plates 48 (refer to Figs. 9 and 10) extending in moving directions of a strip S in parallel with each other with a predetermined interval in a width direction of the strip S. These baffle plates 48 prevent the gas jetted between the pressure receiving surface 45 and a lower surface of the strip S from flowing out in the width directions of the strip to improve the floating efficiency by the gas pressure and make uniform the distribution of the gas pressure in the width direction of the strip to ensure the stable passage of the strip. Moreover, in order to support the strip by rolls 42, they may be raised above upper edges of the baffle plates 48.

According to these embodiments having the support rolls, a strip S can be supported either by the support rolls in contact therewith or by floaters without contacting any solid members at will. Accordingly, for example, when these embodiments are applied to a continuous annealing furnace, either one of the supporting methods may be selected according to kinds of steel of the strip to reduce the production cost and the threading operation can also be securely effected with safety. Moreover, these embodiments may be applied to "heating", "cooling", "coating", "drying", "plating" lines and the like with substantially the same effects as above described.

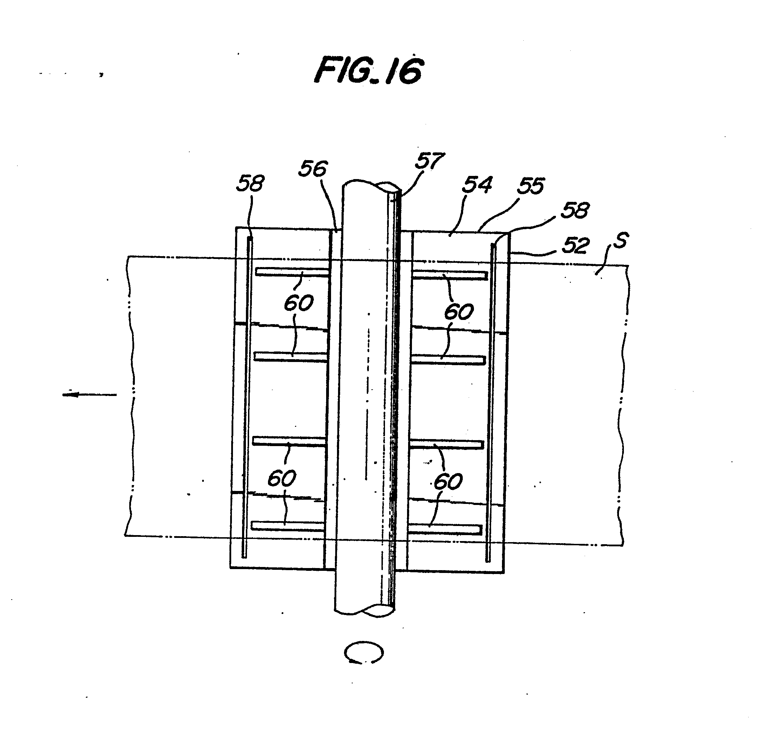

Figs. 15a and 15b and Fig. 16 illustrate another embodiment of the invention. A floater comprises a box-shaped main body 52 forming a fluid chamber 51 accommodating a gas mixture of hydrogen and nitrogen or the like and an upper plate 55 having a pressure receiving surface 54 in opposition to a strip S. The upper plate 55 is formed in its center with a recess 56 extending in a width direction of the strip S. A support roll 57 extending in the with direction of the strip S is provided in the recess 56 in a manner that the support roll 57 is able to move upward and downward in the recess and lifted above upper ends of baffle plates as later described when the support roll 57 is moved upward. The upper plate 55 is provided at both ends in moving directions of the strip with slit-like fluid jetting openings 58 for obliquely jetting the fluid supplied into the chamber 51 in directions converging to each other toward the lower surface of the strip. The chamber 51 is supplied with pressurized fluid through a line 59 connected to the main body 52 from a pressurized fluid source (not shown). Although the fluid jetting openings 18 have been designated in the form of slits, the openings may be formed as a number of small apertures in alignment with each other in the width directions of the strip.

A plurality of baffle plates 60 (four sets of them divided by the recess 56 in this case) are provided on the pressure receiving surface 54 such that the baffle plates 60 extend in moving directions of the strip S and are aligned with each other in width directions of the strip S. Upper surfaces of the baffle plates 60 are formed circularly along a deformed curve of the strip by the gravity.

With this arrangement, the roll 57 is lowered by lifting means (not shown) into the position where the roll 57 is below the upper ends of the baffle plates as shown in Fig. 15b. Pressurized fluid supplied into the chamber 51 through the line 19 is jetted through the fluid jetting openings 18 into clearances between the pressure receiving surfaces 54 and the strip S to maintain the strip S by static pressure of the fluid without contacting any solid members, while the baffle plates prevent the pressurized fluid from escaping in the width directions of the strip S. On the other hand, the roll 57 is raised by the lifting means into the position where the roll 57 extends above the upper ends of the baffle plates 60, while the roll 57 is rotated by a motor and the like (not shown) at a circumferential speed the same as the moving speed of the strip S. In this manner, the strip is supported by the rolls 57 in contact with the strip in "threading" it. When the strip S is supported by the rolls 57, the pressurized fluid may be jetted or not jetted. Whether the floaters are additionally used or not may be determined according to various conditions.

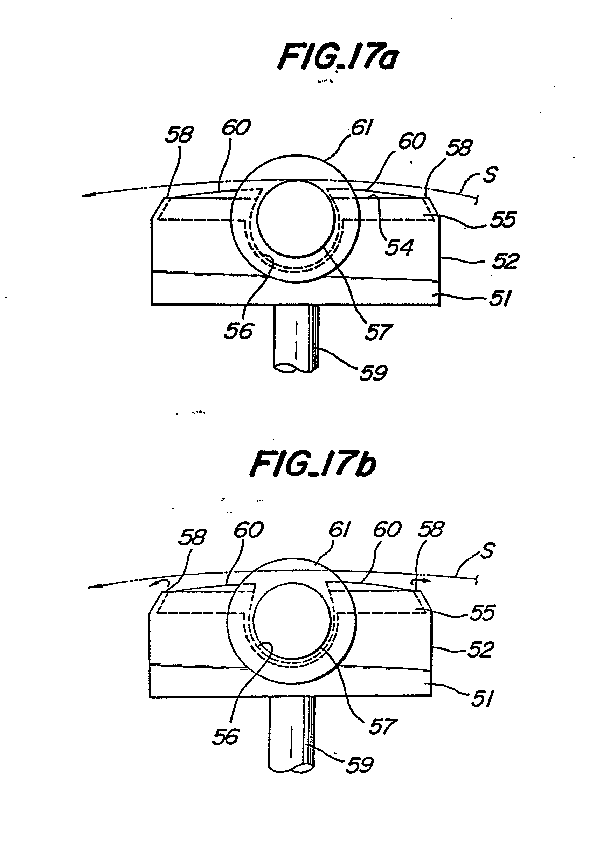

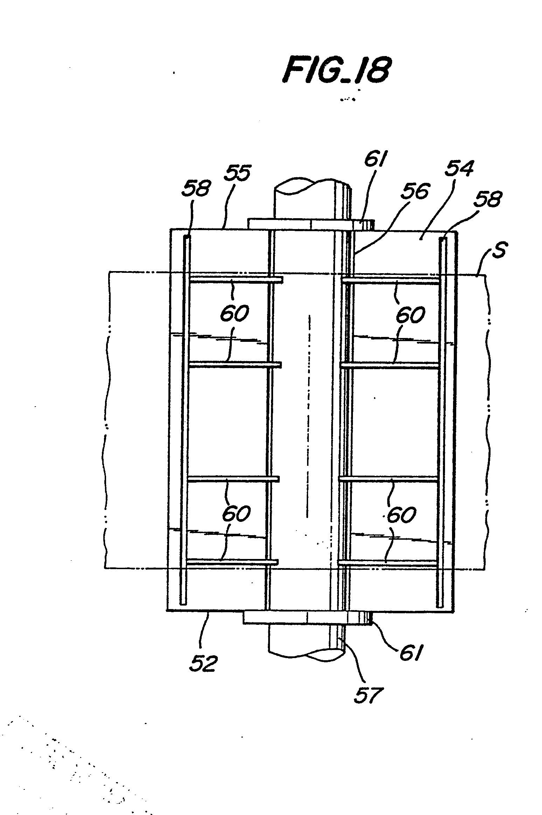

Figs. 17a and 17b and Fig. 18 illustrate a further embodiment of the invention, wherein like components have been designated by the same reference numerals as those in Figs. 15a and 15b and Fig. 16.

In this embodiment, a roll 57 is provided at ends with discs 61 adjacent to side walls of a box-shaped main body 52 with slight clearances. With this arrangement, a strip S is supported in the floating condition by pressurized fluid jetted from fluid jetting openings 58, the discs 61 prevent the leakage of the pressurized fluid flowing along the rolls 57 at the center of a pressure receiving surface 54 where baffle plates 60 are divided by a recess of an upper plate 55.

It is further understood by those skilled in the art that the foregoing description is that of preferred embodiments of the disclosed devices and that various changes and modifications may be made in the invention without departing from the spirit and scope thereof.

- 20 -

## CLAIMS

1. A support device for a moving strip comprising floaters arranged only below the moving strip for jetting fluid against a lower surface of the strip to float it.

2. A support device as set forth in claim 1, wherein a plurality of baffle plates are uprightly provided on a pressure receiving surface of each the floater in opposition to said lower surface of the strip, said baffle plates extending in moving directions of the strip and being aligned with each other in width directions of the strip.

3. A support device as set forth in claim 2, wherein upper edges of said baffle plates are formed circularly along a deformed curve of the strip by gravity.

4. A support device as set forth in claim 1, wherein each the floater is provided with at least one support roll extending in a width direction of the strip and movable into a higher position higher than the highest portion of the floater and a lower position not contacting the strip.

5. A support device as set forth in claim 4, wherein a pair of the support rolls are provided each located upstream and downstream of each the floater and extend in width directions of the strip.

6. A support device as set forth in claim 5, wherein a plurality of baffle plates are uprightly provided on a pressure receiving surface of each the floater in opposition to the lower surface of the strip, said baffle plates extending in moving directions of the strip and being aligned with each other in width directions of the strip.

7. A support device as set forth in claim 4, wherein the support roll is provided in a recess formed in a pressure receiving surface of each the floater.

8. A support device as set forth in claim 7, wherein a plurality of baffle plates are uprightly provided on a pressure receiving surface of each the floater in opposition to the lower surface of the strip, said baffle plates extending in moving directions of the strip and being aligned with each other in width directions of the strip.

9. A support device as set forth in claim 7, wherein said support roll is provided at ends with discs adjacent to side walls of the floater with slight clearances.

*FIG.1* PRIOR ART

*FIG.2* PRIOR ART

*FIG.3* PRIOR ART

# FIG.4

2/11

0202023

0202023

## FIG_5

## FIG_6

# FIG.7

# FIG.8

(%)

40

30

20

10

$$\frac{Measured\ Pressure}{Theoretical\ Pressure} \times 100$$

Strip Center

Left ——— Strip Width ——— Right

## FIG.9

## FIG.10

# FIG_11

## FIG_12

## FIG_13

0202023

## FIG.14

## FIG.15a

## FIG.15b

# FIG. 16

## FIG.17a

## FIG.17b

0202023

# FIG_18